# EUROPEAN PATENT SPECIFICATION

(11) **EP 1 201 072 B1**
(45) Date of publication and mention of the grant of the patent: **02.11.2006**
(21) Application number: 00949731.4
(22) Date of filing: 28.07.2000
(51) Int. Cl.: H04M 3/22, H04M 7/00

(54) **TEST METHOD FOR COMPUTER TELEPHONY LINKS**
PRÜFVERFAHREN FÜR COMPUTERTELEFONIE-VERBINDUNGEN
PROCEDE DE CONTROLE POUR LIAISONS TELEPHONIQUES INFORMATIQUES

(30) Priority: 06.08.1999 EP 99306268
(43) Date of publication of application: 02.05.2002
(73) Proprietor: BRITISH TELECOMMUNICATIONS public limited company, London EC1A 7AJ (GB)
(72) Inventor: REYNOLDS, Richard John Buchan, Ipswich Suffolk IP3 8AP (GB)
(74) Representative: Lidbetter, Timothy Guy Edwin
(86) International application number: PCT/GB2000/002927
(87) International publication number: WO 2001/011854

(56) References cited:
- EP-A- 0 855 824
- WO-A-97/31492
- WO-A-99/09730
- RUDKIN S ET AL: "REAL-TIME APPLICATIONS ON THE INTERNET" BT TECHNOLOGY JOURNAL,GB,BT LABORATORIES, vol. 15, no. 2, page 209-225 XP000703571 ISSN: 1358-3948
- MAESHIMA O; ITO Y; ISHIKURA M; ASAMI T: "A method of service quality estimation with a network measurement tool" IEEE INTERNATIONAL PERFORMANCE, COMPUTING AND COMMUNICATIONS CONFERENCE, PROCEEDINGS OF IPCCC'99, SCOTTSDALE, AZ, USA, 10 - 12 February 1999, pages 201-209, XP002125290 piscataway, NJ,USA,IEEE,USA
- D'HOOGE H: "THE COMMUNICATING PC" IEEE COMMUNICATIONS MAGAZINE,US,IEEE SERVICE CENTER. PISCATAWAY, N.J, vol. 34, no. 4, page 36-42 XP000586068 ISSN: 0163-6804

## Description

This invention relates to a test method for use with computer based telephony.

Conventional telephony services are based upon the provision of a dedicated circuit to connect two telephony users via an exchange. The set-up and maintenance of the circuit have an associated cost, but the dedicated circuit allows a guaranteed quality of service (QoS) for the telephony service provided over the circuit. In contrast, computer communications made over packet based networks do not involve the set-up and maintenance of a circuit, but instead a stream of packets are routed from one computer to a second computer The route taken by consecutive packets may vary according to changes in network performance, congestion, etc. One of the disadvantages of packet-based networks when compared with circuit-based networks is that there is no guarantee that all of the packets transmitted by a computer will arrive at the destination computer or that those packets that are received by the destination computer will arrive in the same order that they were transmitted. Packets can be re-transmitted following a prompt by the destination computer and the application should be capable of re-ordering the received packets into the correct sequence and these steps are of little consequence if the data being transmitted between the computers does not have any time dependence, for example a file transfer, the transmission of an email message, etc. However, if the computers are transmitting real-time data, such as telephony or audio-visual signals for example, then the reception of out of sequence packets and the failure to receive some packets in time, or not at all, may cause significant problems with the playback of the real-time data.

Despite these disadvantages, it is perceived that in the near future most high capacity communications networks will be packet-based networks which will carry all forms of data, including real-time data such as speech and video. It is currently possible to use the public Internet to carry telephony services (often referred to as computer telephony (CT), PC telephony, Internet telephony or voice over IP (VoIP)) but the relatively low bandwidth available to Internet users means that such services tend to be of low quality. If such services are to be made commercially available over, for example, Intranets, Extranets, private data networks, etc., then it will be necessary to supply them with a Quality of Service (QoS) that is comparable with that of traditional, circuit-based telephony networks. International Patent Specifications WO99/09730 and WO97/31492 disclose such systems, in which voice samples are encoded for transmission over a data network. The latter specification discusses the "RSVP" protocol used to optimise the system for voice. However, these make no measurement as to the actual quality achieved. In order for network and service providers to be able to achieve this objective they will need to have a means of measuring and controlling the QoS of CT services.

Maeshima et al ("A method of Service Quality Estimation with a Network Measurement Tool" *(IEEE International performance, Computing and Communications Conference, Scottsdale, Arizona, USA: 10 February 1999)* discloses a process in which a test signal is generated and applied to a network access device. However, this configuration requires modification of the computer telephony application to allow the test signal to be transmitted and received.

A first aspect of the invention provides a telephony terminal comprising:
test means for generating a digital test signal ;
packet handling means for generating a plurality of computer telephony packets carrying the test signal;
means for transmitting the plurality of computer telephony packets from the telephony terminal over a communications medium,
and a sound card driver for providing an interface between the packet handling means and sound digitisation hardware;
characterised in that the soundcard driver is modified such that it also provides an interface between the test means and the packet handling means.

A second aspect provides a telephony terminal comprising:
packet handling means for receiving computer telephony packets from a communications medium;
a sound card driver for providing an interface between the packet handling means and sound digitisation hardware;
and test means for analysing a digital test signal extracted from the received computer telephony packets to evaluate the transmission quality of the communications medium
characterised in that the soundcard driver is modified such that it also provides an interface between the test means and the packet handling means to pass digital signals to the test means

The features of these two aspects may be combined in a terminal such that it may operate either as the generator or receiver of test signals, in cooperation with a similar terminal.

A third aspect of the invention provides a method of measuring transmission quality of a computer telephony service between a first telephony terminal and a second telephony terminal, the first terminal having a sound card driver providing an interface between packet handling means and sound digitisation hardware, the method comprising the steps of:
generating a test signal within a test process in the first telephony terminal;
generating a plurality of computer telephony packets, the computer telephony packets carrying the test signal;
transmitting the plurality of computer telephony packets from the first telephony terminal to a second telephony terminal;
characterised in that
the test signal is passed by the test process to the soundcard driver in the first telephony terminal for transmission to the second terminal, the soundcard driver being modified to interface with the test process (50) such that it inserts the test signal into the plurality of computer telephony packets.

A fourth aspect of the invention provides a method of measuring transmission quality of a computer telephony service between a first telephony terminal and a second telephony terminal, the second terminal having a sound card driver providing an interface between packet handling means and sound digitisation hardware, the method comprising the steps of:
processing a plurality of computer telephony packets in the second terminal to obtain the test signal;
and analysing the extracted test signal to evaluate the transmission quality
characterised in that
the soundcard driver in the second terminal is modified to interface with the test process such that it extracts the test signal from the plurality of computer telephony packets and passes it to the test process.

A further aspect provides the complete process performed by the first and second terminals as specified above.

The use of a modified sound card allows the test signal to be handled by the computer telephony interface as any other signal, thereby making the test process more accurate.

The test signal may be derived from a voice signal received by the sound card. The results of the signal quality analysis performed by the second terminal may be transmitted to the first terminal.

The invention may be implemented by computer code carried on a data carrier for loading into a computer.

An embodiment of the invention will now be described, by way of example only, with reference to the following figures in which;
Figure 1 shows a functional block diagram of a computer telephony terminal;
Figure 2 shows a functional block diagram of a computer telephony terminal incorporating the present invention;
Figure 3 shows a schematic depiction of computer telephony terminals connected to a communications network ; and
Figure 4 shows a functional block diagram of a computer telephony system incorporating a preferred embodiment of the present invention.

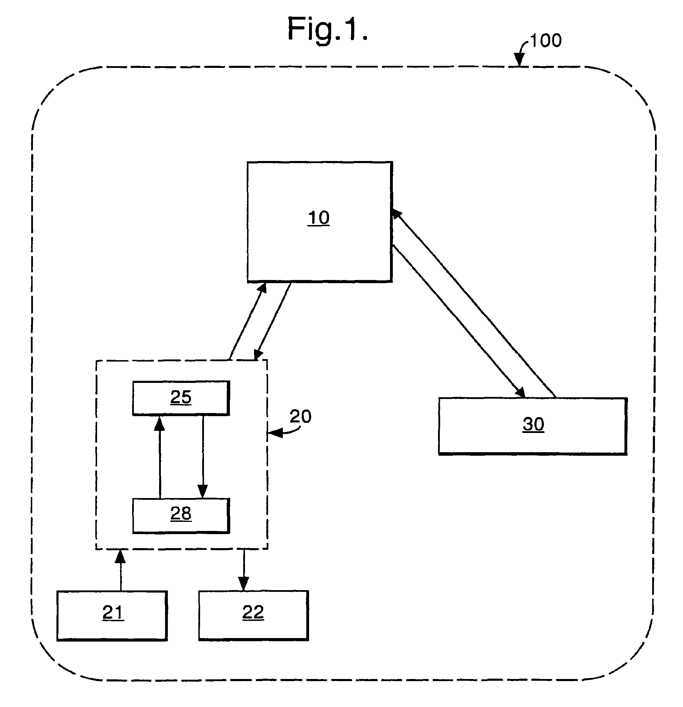

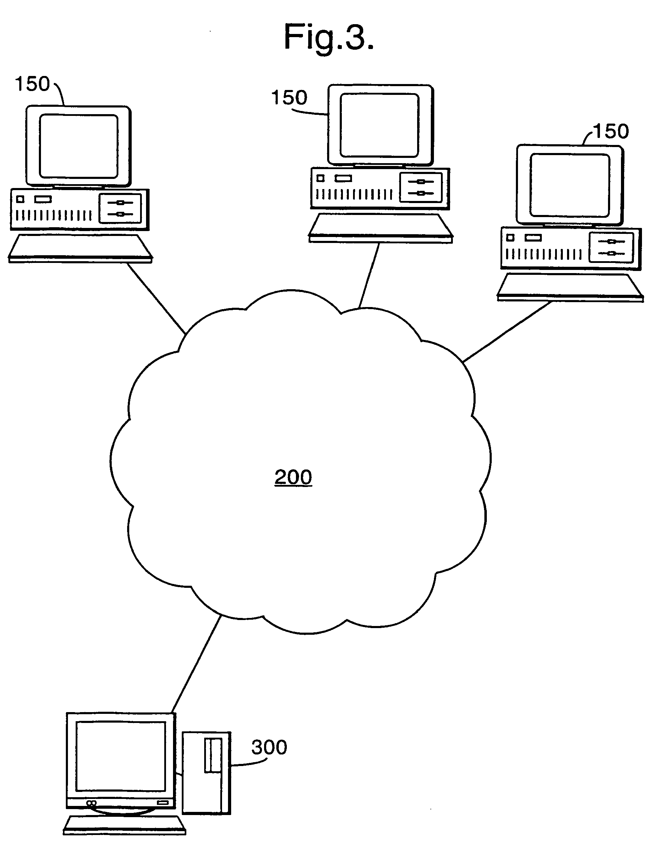

Figure 1 shows a functional block diagram of a computer telephony terminal. The computer telephony terminal is implemented as a computer. The computer includes a central processing unit, memory and storage devices and various hardware devices such as a display unit and a keyboard. The computer has an operating system (indicated by reference numeral 100 in Figure 1) stored in the memory and storage devices. Software applications such as a word processor application and an Internet browser may also be stored in the memory and storage devices and run under the operating system. As will now be described with reference to Figure 1, the computer includes a software application and hardware to provide it with the functionality of a computer telephony terminal. As shown in Figure 1, the computer telephony terminal includes a computer telephony (CT) software application 10, which is a process that is run under the computer operating system 100. The CT application is used to establish a communication link with a CT application which is being run on a second computer, which is connected to the first computer via a communications network (see Figure 3). It is also possible for the CT application to communicate with a standard telephone which is connected to the PSTN (public switched telephony network) if there is a suitable gateway from the communications network to the PSTN. Additionally, the CT application may communicate with a so-called 'internet phone' which has the appearance and functionality of a conventional telephone but instead of connecting to, and communicating via, the PSTN such 'internet phones' are connected to the communication network and provide the same functionality as a computer running a CT application but at much reduced cost and complexity (see *"Voice-Data Convergence and the Corporate Voice-Over-IP Trial",* A Catchpole, IBTE Journal, volume 17, part 4, January 1999, pages 218-224).

The CT application 10 communicates with a CT application in another computer, or internet phone, by sending and receiving data transmission packets, the data packets containing short segments of speech. The CT application 10 communicates with the computer's soundcard 20, which is connected to a microphone 21 and a loudspeaker(s) 22 (the microphone and loudspeaker(s) may be integrated and take the form of a headset or a conventional telephony handset). The user's voice signal is captured by the microphone 21 and then the soundcard converts the analogue signal supplied by the microphone into digital voice data. This digital voice data is then sent to the CT application, which may perform some form of data modulation or compression in order to increase the efficiency of the data transmission across the network before the digital voice data is arranged into packets of a suitable size (either in terms of the number of bytes of the package or in terms of the length of speech that is represented by the digital voice data). These voice data packets are sent to the communications interface 30 such that the voice data therein may be transmitted to the destination computer. The communications interface 30 may be a modem for dial-up access to a packet-based network or it may be a network card for direct access to a packet-based network. The communications interface places the voice data packets within the payload of the data transmission packets used by the communications interface, for example TCP (Transmission Control Protocol), UDP (User Datagram Protocol), etc. The data transmission packets are then routed across the communications network (see Figure 3) to the destination computer, where the analogue speech signal is recovered in a manner described below.

The communications interface 30 receives data transmission packets that have been sent to the computer and differentiates the data transmission packets by their content, for example part of a stream of computer telephony packets, a WWW download, an email message, etc. For CT data, the voice data packets are extracted from the payload of the data transmission packets and are then sent to the CT application 10. The CT application processes the voice data packets, ordering them in the correct sequence and demodulating (and/or decompressing) the data as necessary so that a stream of digital voice data can be sent to the soundcard 20, which converts the data from a digital signal to an analogue signal, which can then be played back to the user through the loudspeaker(s) 22.

The soundcard provides functionality using both hardware 28, which interfaces with the external hardware (loudspeakers, microphone, etc.) and the internal bus of the computer, and software drivers 25 stored in a memory device, which may be mounted on the soundcard, which allow the operating system and the applications running on the computer to access functions that cause the hardware to respond accordingly.

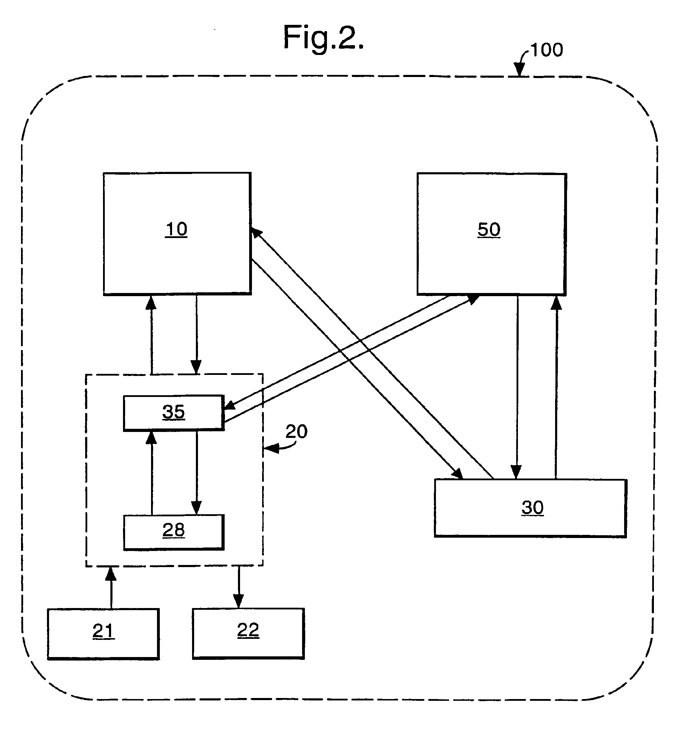

Figure 2 shows a schematic representation of a computer telephony terminal incorporating the present invention. The CT terminal shown in Figure 2 is generally similar to the CT terminal of Figure 1 but modified as described below. Test application 50 is a software process running under the computer operating system in parallel with the CT application 10 and any other software applications. The soundcard software drivers 25 shown in Figure 1 have been replaced with modified soundcard drivers 35. These modified drivers have all the functionality required to operate under the operating system 100 (as do the soundcard drivers 25 shown in Figure 1) plus additional functionality in order to interface with the test application.

The test application 50 interfaces with the modified soundcard drivers so that test signals can be injected into the digital voice data before it is passed to the CT application for onward transmission. Similarly, the test application 50 can extract test signals from received digital voice data that have been passed from the CT application to the soundcard and analyse the extracted test signals in order to determine the transmission quality. If non-intrusive test methods are being used, i.e. the spectral properties of the received speech signals are being analysed, then no test signals are injected into the digital voice data packets on the transmission side. On the receive side,the test application needs to take a copy of the digital voice data that has been passed from the CT application to the soundcard. When two computers, each arranged as shown in Figure 2, are connected to a communications network, and a telephony link is established between the computers, it is possible to measure the quality of the telephony link. More specifically, the test application in one computer can cause test signals to be injected into voice data packets generated by the CT application, so that the voice data packets may contain only a test signal or a combination of a voice signal and a test signal. The test signal can be analysed by the test application in the other computer. The test signal may measure delay, frequency shaping, temporal clipping in the communications link. The test signals may also be used to assess speech quality using known perceptual analysis methods (see, for example, EP-B-0 647 375, EP-A-0 776 566 & EP-A-0 776567). As mentioned above, the test application may be used to perform both intrusive or non-intrusive tests. However, depending upon the nature of the test, intrusive tests may be unsuitable for a telephony link which is carrying real telephony traffic. If a non-intrusive test method is used, then the voice-data packets will only contain voice signals.

By analysing the received test signals, the test applications 50 can be used to quantify the QoS for the computer telephony link between the two computers. If the QoS is inadequate then the test application 50 may communicate with the operational support services (OSSs) which are used to manage the network over which the CT services are being provided. These OSSs will attempt to increase the QoS, for example, by allocating more resources to the two computers 100 or by increasing the priority of the CT data in the routers and/or switches over non-real time data.

Referring now to Figure 3, there is shown three client computers 150 and a server computer 300 connected to a packet-based communications network 200. Each of the client computers 1 50 takes the form of the computer telephony terminal shown in Figure 2. Each of the client computers 150 may be connected to the network 200 by a dial-up connection or by a direct connection. The server computer 300 comprises a communications interface, a computer telephony application, a test application and a soundcard. The server computer 300 may make computer telephony connections with each of the client computers 150 or with other suitably equipped computers solely for the purpose of testing the quality of the computer telephony connection. Each client computer 150 may communicate QoS results to the server computer 300 (whether generated from a connection with the server computer or with another client computer) so that QoS data can be collected for the network 200. This enables network managers and or administrators to monitor the QoS variations of the network 200 and allocate network resources accordingly.

The server computer 300 may also be used when a new computer is connected to a network to quantify the computer telephony performance of the newly connected computer. The same process may also be used when computer telephony functionality is added to a networked computer to determine the QoS of the computer's telephony functionality. More specifically, when a client computer, such as one of the computers 150 is connected to the network 200, it can transmit a predetermined set of test signals to the server computer 300. The server computer 300 can analyse the test signals to determine whether the client computer has been correctly configured for use in computer telephony. The results of the analysis can then be fed back to the client computer so that the client computer can be more optimally configured. A client computer may also be tested in this way at periodic intervals. As high-speed network connections, such as DSL and cable modems, become more commonplace then the use of computer telephony in mass market applications will increase. Typically, as a CT session may need only 10-20kbit/s, in comparison with the 0.5-10 Mbit/s potential of DSL services then it is a simple matter for the test application to negotiate with the aspect of the operating system that controls the network interface in order to acquire greater bandwidth.

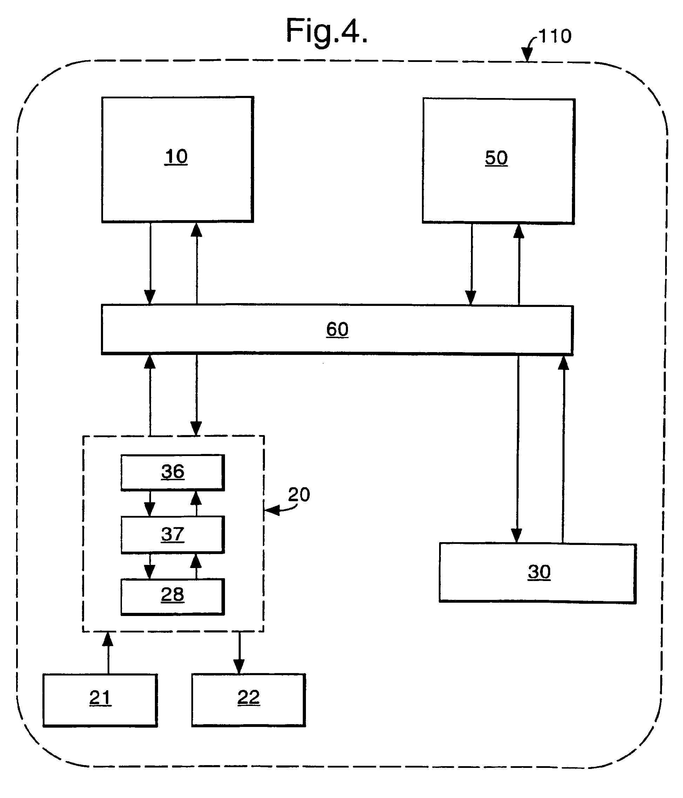

Figure 4 shows a functional block diagram of a computer telephony terminal incorporating a preferred embodiment of the present invention. The CT terminal shown in Figure 4 is generally similar to the CT terminal shown in Figure 2, but modified as will now be described. In the CT terminal in Figure 4, the computer telephony application 10 and a test application 50 run under the Windows 95 operating system 110. The CT application 10 accesses the Windows 95 APIs (Application Programming Interfaces) 60 in a known manner in order that the CT application is able to access all of the resources available from the computer hardware and the operating system. Using the DirectSound functionality, the APls address the DirectSound DLL (Dynamic Linked Library (commonly referred to as dsoundx.dll)). The DirectSound DLL communicates with a dummy device driver 36 (referred to as dds.dev as it is the dummy ds.dev file) which communicates with a virtual device driver (VxD) 37 of the soundcard 20 {the dds.dev 36 and the soundcard VxD 37 combine to form the soundcard driver 35 of Figure 2}. It is preferred, for ease of programming, to add the functionality required to interface with the test application 50 to the dds.dev 36 driver rather than the VxD 37, although as this preference is due to a lack of tools and an environment in which to develop VxDs, as and when such tools become available then there will be little preference attached to the addition of functionality to either the dds.dev 36 driver or the VxD 37. Additionally, it is to be understood that the required functionality could be added to the VxD or to the combination of the dds.dev and the VxD. The CT application 10 and the CT test application 50 function as described above.

Although it is preferred to implement the present invention for a computer using the Windows 95 operating system, it will be readily understood that the invention is equally applicable for use with other operating systems such as other Windows variants (Windows 3.1, Windows NT, Windows 98, Windows 2000, etc.) MacOS, BeOS, Linux and Unix variants, etc.

It should be understood that although the above discussion has focused upon the addition of test functionality into a computer running a computer telephony application, the same test functionality can be incorporated into an Internet phone, network computer, set top box or other network device that provides computer telephony functionality. In such a case the invention may be implemented using solely software, solely hardware or a combination of software and hardware.

## Claims

1. A telephony terminal (100) comprising:
test means (50) for generating a digital test signal;
packet handling means (10) for generating a plurality of computer telephony packets carrying the test signal;
means (30) for transmitting the plurality of computer telephony packets from the telephony terminal (100) over a communications medium to a receiving telephony terminal, and for receiving computer telephony packets over the communications medium from a sending telephony terminal,
packet handling means (10) for processing the received computer telephony packets;
test means (50) for analysing a digital test signal extracted from the received computer telephony packets to evaluate the transmission quality of the communications medium
and a sound card driver (35) for providing an interface between the packet handling means (10) and sound digitisation hardware (28);
**characterised in that** the soundcard driver (35) is modified such that it also provides an interface between the test means (50) and the packet handling means (10) .

2. A telephony terminal (100) comprising:
test means (50) for generating a digital test signal ;
packet handling means (10) for generating a plurality of computer telephony packets carrying the test signal;
means (30) for transmitting the plurality of computer telephony packets from the telephony terminal (100) over a communications medium to a receiving telephony terminal
and a sound card driver (35) for providing an interface between the packet handling means 10 and sound digitisation hardware (28);
**characterised in that** the soundcard driver (35) is modified such that it also provides an interface between the test means (50) and the packet handling means (10)

3. A telephony terminal (100) comprising:
means (30) for receiving computer telephony packets over a communications medium from a sending telephony terminal
a sound card driver (35) for providing an interface between the packet handling means 10 and sound digitisation hardware (28)
and test means (50) for analysing a digital test signal extracted from the received computer telephony packets to evaluate the transmission quality of the communications medium
**characterised in that** the soundcard driver (35) is modified such that it also provides an interface between the test means (50) and the packet handling means (10) to pass the received computer telephony packets including the test signal to the test means.

4. A telephony terminal according to claim 1 or claim 3, wherein the test means (50) has means for deriving a test signal from a voice signal received by the sound card (35) over the communications medium from a sending telephony terminal.

5. A telephony terminal according to claim 1 or 3, further comprising means for communicating the signal quality analysis to the sending terminal over the communications medium.

6. A method of measuring transmission quality of a computer telephony service between a sending telephony terminal and a receiving telephony terminal, each having a sound card driver (35) providing an interface between packet handling means (10) and sound digitisation hardware (28), the method comprising the steps of:
generating a test signal within a test process (50) in the sending telephony terminal;
generating a plurality of computer telephony packets, the computer telephony packets carrying the test signal;
transmitting the plurality of computer telephony packets from the sending telephony terminal to a second telephony terminal;
processing the plurality of computer telephony packets in the receiving terminal to obtain the test signal;
and analysing the extracted test signal to evaluate the transmission quality
**characterised in that**
the test signal is passed from the test process (50) to the soundcard driver (35) in the sending telephony terminal, and is transmitted to the soundcard driver (35) in the receiving telephony terminal, the soundcard drivers being modified to interface with the respective test processes (50) such that they insert and extract the test signal to and from the plurality of computer telephony packets.

7. A method of measuring transmission quality of a computer telephony service between a first telephony terminal and a second telephony terminal, the first terminal having a sound card driver (35) providing an interface between packet handling means (10) and sound digitisation hardware (28), the method comprising the steps of:
generating a test signal within a test process (50) in the first telephony terminal;
generating a plurality of computer telephony packets, the computer telephony packets carrying the test signal;
transmitting the plurality of computer telephony packets from the first telephony terminal to a second telephony terminal;
**characterised in that**
the test signal is passed by the test process (50) to the soundcard driver (35) in the first telephony terminal for transmission to the second terminal, the soundcard driver being modified to interface with the test process (50) such that the test process inserts the test signal into the plurality of computer telephony packets.

8. A method of measuring transmission quality of a computer telephony service between a first telephony terminal and a second telephony terminal, the second terminal having a sound card driver (35) providing an interface between packet handling means 10 and sound digitisation hardware (28), the method comprising the steps of:
processing a plurality of computer telephony packets in the second terminal to obtain the test signal;
and analysing the extracted test signal to evaluate the transmission quality
**characterised in that**
the soundcard driver in the second terminal is modified to interface with the test process (50) such that the test process extracts the test signal from the plurality of computer telephony packets and passes the received computer telephony packets including the test signal to the test process (50).

9. A method according to claim 6 or 8 wherein the test signal is derived from the voice signal contained within the voice-data packets received from the sending terminal.

10. A method according to claim 6 or claim 8, wherein the method comprises the further step of ;
communicating the signal quality analysis to the sending terminal.

11. A method according to claim 6, 7, 8, 9 or 10 wherein the computer telephony packets carry both the test signal and voice data.

12. A data carrier containing computer code for loading into a computer for the performance of any of claims 6 to 11.

## Patentansprüche

1. Telefonendgerät (100), das aufweist:
Testmittel (50) zum Erzeugen eines digitalen Testsignals; Pakethandhabungsmittel (10) zum Erzeugen einer Vielzahl von Computertelefoniepaketen, die das Testsignal tragen;
Mittel (30) zum Übertragen der Vielzahl von Computertelefoniepaketen von dem Telefonendgerät (100) über ein Kommunikationsmedium an ein empfangendes Telefonendgerät, und zum Empfang von Computertelefoniepaketen über das Kommunikationsmedium von einem sendenden Telefonendgerät; Pakethandhabungsmittel (10) zur Verarbeitung der empfangenen Computertelefoniepakete;
Testmittel (50) zur Analyse eines digitalen Testsignals, das aus den empfangenen Computertelefoniepaketen extrahiert wird, um die Übertragungsqualität des Kommunikationsmediums zu evaluieren;
und einen Soundkartentreiber (35) zum Vorsehen einer Schnittstelle zwischen dem Pakethandhabungsmittel (10) und einer Sounddigitalisierungs-Hardware (28);
**dadurch gekennzeichnet, dass** der Soundkartentreiber (35) derart modifiziert ist, dass er auch eine Schnittstelle zwischen dem Testmittel (50) und dem Pakethandhabungsmittel (10) vorsieht.

2. Telefonendgerät (100), das aufweist:
Testmitteln (50) zum Erzeugen eines digitalen Testsignals; Pakethandhabungsmittel (10) zum Erzeugen einer Vielzahl von Computertelefoniepaketen, die das Testsignal tragen;
Mittel (30) zum Übertragen der Vielzahl von Computertelefoniepaketen von dem Telefonendgerät (100) über ein Kommunikationsmedium an ein empfangendes Telefonendgerät;
und einen Soundkartentreiber (35) zum Vorsehen einer Schnittstelle zwischen dem Pakethandhabungsmittel (10) und einer Sounddigitalisierungs-Hardware (28);
**dadurch gekennzeichnet, dass** der Soundkartentreiber (35) derart modifiziert ist, dass er auch eine Schnittstelle zwischen dem Testmittel (50) und dem Pakethandhabungsmittel (10) vorsieht.

3. Telefonendgerät (100), das aufweist:
Mittel (30) zum Empfangen von Computertelefoniepaketen über ein Kommunikationsmedium von einem empfangenden Telefonendgerät;
Soundkartentreiber (35) zum Vorsehen einer Schnittstelle zwischen dem Pakethandhabungsmittel (10) und einer Sounddigitalisierungs-Hardware (28);
und Testmittel (50) zum Analysieren eines digitalen Testsignals, das aus den empfangenen Computertelefoniepaketen extrahiert wird, um die Übertragungsqualität des Kommunikationsmediums zu evaluieren;
**dadurch gekennzeichnet, dass** der Soundkartentreiber (35) derart modifiziert ist, dass er auch eine Schnittstelle zwischen dem Testmittel (50) und dem Pakethandhabungsmittel (10) vorsieht, um die empfangenen Computertelefoniepakete, einschließlich des Testsignals, an das Testmittel zu übermitteln.

4. Telefonendgerät gemäß Anspruch 1 oder Anspruch 3, wobei das Testmittel (50) Mittel hat zum Ableiten eines Testsignals aus einem Sprachsignal, das von der Soundkarte (35) über das Kommunikationsmedium von einem sendenden Telefonendgerät empfangen wird.

5. Telefonendgerät gemäß Anspruch 1 oder Anspruch 3, das weiter Mittel aufweist zum Kommunizieren der Signalqualitätsanalyse über das Kommunikationsmedium an das sendende Endgerät.

6. Verfahren zum Messen einer Übertragungsqualität eines Computertelefondienstes zwischen einem sendenden Telefonendgerät und einem empfangenden Telefonendgerät, wobei jedes einen Soundkartentreiber (35) aufweist, der eine Schnittstelle zwischen dem Pakethandhabungsmittel (10) und einer Sounddigitalisierungs-Hardware (28) vorsieht, wobei das Verfahren die Schritte aufweist:
Erzeugen eines Testsignals in einem Testverfahren (50) in dem sendenden Telefonendgerät;
Erzeugen einer Vielzahl von Computertelefoniepaketen, wobei die Computertelefoniepakete das Testsignal tragen;
Übertragen der Vielzahl von Computertelefoniepaketen von dem sendenden Telefonendgerät an ein zweites Telefonendgerät; Verarbeiten der Vielzahl von Computertelefoniepaketen in dem empfangenden Telefonendgerät, um das Testsignal zu erlangen; und Analyse des extrahierten Testsignals, um die Übertragungsqualität zu evaluieren;
**dadurch gekennzeichnet, dass**
das Testsignal von dem Testverfahren (50) an den Soundkartentreiber (35) in dem sendenden Telefonendgerät übermittelt wird, und an den Soundkartentreiber (35) in dem empfangenden Telefonendgerät übertragen wird, wobei die Soundkartentreiber (35) modifiziert werden, mit den jeweiligen Testverfahren (50) derart eine Schnittstelle zu bilden, dass sie das Testsignal in die Vielzahl von Computertelefoniepaketen einfügen und daraus extrahieren.

7. Verfahren zum Messen einer Übertragungsqualität eines Computertelefondienstes zwischen einem ersten Telefonendgerät und einem zweiten Telefonendgerät, wobei das erste Telefonendgerät einen Soundkartentreiber (35) aufweist, der eine Schnittstelle zwischen dem Pakethandhabungsmittel (10) und einer Sounddigitalisierungs-Hardware (28) vorsieht, wobei das Verfahren die Schritte aufweist:
Erzeugen eines Testsignals in einem Testverfahren (50) in dem ersten Telefonendgerät;
Erzeugen einer Vielzahl von Computertelefoniepaketen, wobei die Computertelefoniepakete das Testsignal tragen;
Übertragen der Vielzahl von Computertelefoniepaketen von dem ersten Telefonendgerät an ein zweites Telefonendgerät;
**dadurch gekennzeichnet, dass**
das Testsignal von dem Testverfahren (50) an den Soundkartentreiber (35) in dem ersten Telefonendgerät übermittelt wird zur Übertragung an das zweite Endgerät, wobei der Soundkartentreiber (35) modifiziert wird, mit dem Testverfahren (50) derart eine Schnittstelle zu bilden, dass das Testverfahren das Testsignal in die Vielzahl von Computertelefoniepaketen einfügt.

8. Verfahren zum Messen einer Übertragungsqualität eines Computertelefondienstes zwischen einem ersten Telefonendgerät und einem zweiten Telefonendgerät, wobei das zweite Endgerät einen Soundkartentreiber (35) aufweist, der eine Schnittstelle zwischen dem Pakethandhabungsmittel (10) und einer Sounddigitalisierungs-Hardware (28) vorsieht, wobei das Verfahren die Schritte aufweist:
Verarbeiten einer Vielzahl von Computertelefoniepaketen in dem zweiten Endgerät, um das Testsignal zu erlangen;
und Analysieren des extrahierten Testsignals, um die Übertragungsqualität zu evaluieren;
**dadurch gekennzeichnet, dass**
der Soundkartentreiber in dem zweiten Endgerät modifiziert wird, mit dem Testverfahren (50) derart eine Schnittstelle zu bilden, dass das Testverfahren das Testsignal aus der Vielzahl von Computertelefoniepaketen extrahiert und die empfangenen Computertelefoniepakete, einschließlich dem Testsignal, an das Testverfahren (50) übermittelt.

9. Verfahren gemäß Anspruch 6 oder 8, wobei das Testsignal aus dem Sprachsignal abgeleitet wird, das in den Sprachdatenpaketen enthalten ist, die von dem sendenden Endgerät empfangen werden.

10. Verfahren gemäß Anspruch 6 oder Anspruch 8, wobei das Verfahren den weiteren Schritt aufweist:
Kommunizieren die Signalqualitätsanalyse an das sendende Endgerät.

11. Verfahren gemäß Anspruch 6, 7, 8, 9 oder 10, wobei die Computertelefoniepakete sowohl das Testsignal als auch Sprachdaten tragen.

12. Datenträger, der einen Computercode enthält, zum Laden in einen Computer zur Durchführung eines der Ansprüche 6 bis 11.

## Revendications

1. Terminal de téléphonie (100) comprenant :
un moyen d'essai (50) destiné à générer un signal d'essai numérique ;
un moyen de manipulation de paquets (10) destiné à engendrer une pluralité de paquets de téléphonie informatique portant le signal d'essai ;
un moyen (30) de transmission de la pluralité de paquets de téléphonie informatique du terminal de téléphonie (100) sur un support de communication vers un terminal de téléphonie récepteur, et de réception des paquets de téléphonie informatique sur le support de communication en provenance d'un terminal de téléphonie émetteur,
un moyen de manipulation de paquets (10) destiné à traiter les paquets de téléphonie informatique reçus ;
un moyen d'essai (50) destiné à analyser un signal d'essai numérique extrait des paquets de téléphonie informatique reçus pour évaluer la qualité de transmission du support de communication
et un pilote de carte son (35) destiné à former une interface entre le moyen de manipulation de paquets (10) et un matériel de numérisation de son (28) ;
**caractérisé en ce que** le pilote de carte son (35) est modifié de telle sorte qu'il forme également une interface entre le moyen d'essai (50) et le moyen de manipulation de paquets (10).

2. Terminal de téléphonie (100) comprenant :
un moyen d'essai (50) destiné à engendrer un signal d'essai numérique ;
un moyen de manipulation de paquets (10) destiné à engendrer une pluralité de paquets de téléphonie informatique portant le signal d'essai ;
un moyen (30) de transmission de la pluralité de paquets de téléphonie informatique du terminal de téléphonie (100) sur un support de communication vers un terminal de téléphonie récepteur,
et un pilote de carte son (35) destiné à former une interface entre le moyen de manipulation de paquets (10) et un matériel de numérisation de son (28) ;
**caractérisé en ce que** le pilote de carte son (35) est modifié de telle sorte qu'il forme également une interface entre le moyen d'essai (50) et le moyen de manipulation de paquets (10).

3. Terminal de téléphonie (100) comprenant :
un moyen (30) destiné à recevoir des paquets de téléphonie informatique sur un support de communication en provenance d'un terminal de téléphonie émetteur,
un pilote de carte son (35) destiné à former une interface entre le moyen de manipulation de paquets (10) et un matériel de numérisation de son (28)
et un moyen d'essai (50) destiné à analyser un signal d'essai numérique extrait des paquets de téléphonie informatique reçus pour évaluer la qualité de transmission du support de communication
**caractérisé en ce que** le pilote de carte son (35) est modifié de telle sorte qu'il forme également une interface entre le moyen d'essai (50) et le moyen de manipulation de paquets (10) pour transmettre, au moyen d'essai, les paquets de téléphonie informatique reçus comprenant le signal d'essai.

4. Terminal de téléphonie selon la revendication 1 ou la revendication 3, dans lequel le moyen d'essai (50) comporte un moyen destiné à dériver un signal d'essai d'un signal vocal reçu par la carte son (35) sur le support de communication en provenance d'un terminal de téléphonie émetteur.

5. Terminal de téléphonie selon la revendication 1 ou 3, comprenant en outre un moyen destiné à communiquer l'analyse de qualité de signal au terminal émetteur sur le support de communication.

6. Procédé de mesure de la qualité de transmission d'un service de téléphonie et d'informatique entre un terminal de téléphonie émetteur et un terminal de téléphonie récepteur, chacun ayant un pilote de carte son (35) formant une interface entre un moyen de manipulation de paquets (10) et un matériel de numérisation de son (28), le procédé comprenant les étapes consistant à :
engendrer un signal d'essai dans un procédé d'essai (50) dans le terminal de téléphonie émetteur;
engendrer une pluralité de paquets de téléphonie informatique, les paquets de téléphonie informatique portant le signal d'essai ;
transmettre la pluralité de paquets de téléphonie informatique en provenance du terminal de téléphonie émetteur vers un second terminal de téléphonie ;
traiter la pluralité de paquets de téléphonie informatique dans le terminal récepteur pour obtenir le signal d'essai ;
et analyser le signal d'essai extrait pour évaluer la qualité de transmission
**caractérisé en ce que**
le signal d'essai est transmis du procédé d'essai (50) au pilote de carte son (35) dans le terminal de téléphonie émetteur, et est transmis au pilote de carte son (35) dans le terminal de téléphonie récepteur, les pilotes de carte son étant modifiés pour former interface avec les procédés d'essai respectifs (50) de telle sorte qu'ils insèrent et extraient le signal d'essai vers et de la pluralité de paquets de téléphonie informatique.

7. Procédé de mesure de la qualité de transmission d'un service de téléphonie et d'informatique entre un premier terminal de téléphonie et un second terminal de téléphonie, le premier terminal comportant un pilote de carte son (35) formant une interface entre un moyen de manipulation de paquets (10) et un matériel de numérisation de son (28), le procédé comprenant les étapes consistant à :
engendrer un signal d'essai dans un procédé d'essai (50) dans le premier terminal de téléphonie ;
engendrer une pluralité de paquets de téléphonie informatique, les paquets de téléphonie informatique portant le signal d'essai ;
transmettre la pluralité de paquets de téléphonie informatique en provenance du premier terminal de téléphonie vers un second terminal de téléphonie ;
**caractérisé en ce que**
le signal d'essai est transmis par le procédé d'essai (50) au pilote de carte son (35) dans le premier terminal de téléphonie pour une transmission au second terminal, le pilote de carte son étant modifié pour former interface avec le procédé d'essai (50) de telle sorte que le procédé d'essai insère le signal d'essai dans la pluralité de paquets de téléphonie informatique.

8. Procédé de mesure de la qualité de transmission d'un service de téléphonie et d'informatique entre un premier terminal de téléphonie et un second terminal de téléphonie, le second terminal comportant un pilote de carte son (35) formant une interface entre un moyen de manipulation de paquets (10) et un matériel de numérisation de son (28), le procédé comprenant les étapes consistant à :
traiter une pluralité de paquets de téléphonie informatique dans le second terminal pour obtenir le signal d'essai ;
et analyser le signal d'essai extrait pour évaluer la qualité de transmission
**caractérisé en ce que**
le pilote de carte son (35) dans le second terminal est modifié pour former interface avec le procédé d'essai (50) de telle sorte que le procédé d'essai extrait le signal d'essai de la pluralité de paquets de téléphonie informatique et transmet, au procédé d'essai (50), les paquets de téléphonie informatique reçu comprenant le signal d'essai.

9. Procédé selon la revendication 6 ou 8, dans lequel le signal d'essai est dérivé du signal vocal contenu au sein des paquets de données vocales reçus en provenance du terminal émetteur.

10. Procédé selon la revendication 6 ou 8, dans lequel le procédé comprend l'étape supplémentaire consistant à :
communiquer l'analyse de qualité de signal au terminal émetteur.

11. Procédé selon la revendication 6, 7, 8, 9 ou 10, dans lequel les paquets de téléphonie informatique portent à la fois le signal d'essai et des données vocales.

12. Porteur de données contenant un code machine pour chargement dans un ordinateur pour effectuer l'une quelconque des revendications 6 à 11.
